(19) Europäisches Patentamt
European Patent Office
Office européen des brevets

(11) **EP 2 078 939 A1**

(12) **EUROPEAN PATENT APPLICATION**

(43) Date of publication:
**15.07.2009 Bulletin 2009/29**

(51) Int Cl.:
**G01J 3/45** (2006.01)   **G01J 3/453** (2006.01)
**G01B 9/02** (2006.01)

(21) Application number: **08100369.1**

(22) Date of filing: **11.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **FOSS Analytical A/S**
**3400 Hilleroed (DK)**

(72) Inventor: **Andersen, Hans Villemoes**
**3400, Hilleroed (DK)**

(74) Representative: **Hilton, Charles Paul**
**FOSS Analytical A/S**
**Intellectual Property**
**Slangerupgade 69**
**3400 Hilleroed (DK)**

(54) **Interferometer**

(57)     An interferometer **(70)** for observing a source of observed radiation **(10)** employing a source of reference radiation **(12) characterised in that** the interferometer **(70)** is configured to provide a ratio between the retardation of reference radiation and the retardation of observed radiation which is higher than 1.

Fig. 3

EP 2 078 939 A1

**Description**

The present invention relates to the technical field of optical interferometers.

In the recording of a Fourier Transform (FT) spectrum the sampling at exact equidistant positions of the moving mirror is critical for avoiding error when using the Fast FT routine. However the movement of the mirror with sufficiently low variation requires the use of very expensive actuators, and therefore it has become practice in FT spectroscopy to use a source of reference radiation such as a laser in a FT spectrometer parallel to the FT spectrometer used for observing the radiation of interest (the observed radiation), which may or may not employ the same optical elements, to generate a sampling signal, which is an important reason for the high performance of FT spectrometers today.

To understand the principle of reference radiation, it is important to understand the workings of an interferometer observing monochromatic radiation. In an interferometer, the difference between the optical distance in the two arms is termed the retardation, $\delta$. The interferogram, i.e. the intensity of the output of the interferometer, will be given by

$$I_{AC} \cdot \cos(\frac{2\pi\delta}{\lambda}) + I_{DC}.$$

where $\lambda$ is the wavelength of the monochromatic radiation, $I_{AC}$ is the intensity modulation and $I_{DC}$ is a constant intensity bias. For an ideal interferometer and a monochromatic source with infinite coherence length, $I_{DC}$ will be equal to $I_{AC}$. However, due to non-ideal conditions, $I_{AC}$ is smaller than $I_{DC}$.

The sinusoidal term of the intensity signal provides an accurate measure of the retardation. If the signal arising from $I_{DC}$ is removed, e.g. by an ideal electrical high-pass filter, the remaining signal will cross zero when $\delta$ equals $N\cdot\lambda/2+\lambda/4$ where N is an integer. Thus, the zero crossings correspond to equidistant values of retardation, if the reference radiation has a fixed wavelength.

In a conventional Michelson interferometer, the variation of the retardation is obtained by moving a mirror in one of the interferometer arms. A mirror displacement of $\Delta x$ gives rise to a change in retardation of $\delta=\alpha\Delta x+b$, where $\alpha$ because of the reflection will be two and b will be different from 0 in an assymetric interferometer. Thus, if the mirror is moved with a constant velocity of v, the frequency of the sinusoidal intensity term will be equal to $f_{ref}=2v/\lambda$. The zero crossings of this term for reference radiation are used to trigger a sampling of the observed radiation, which will then occur at a sampling frequency of $f_{samp}=2f_{ref}=4v/\lambda$. The sinusoidal term may be obtained as the bias corrected interferogram.

The Nyquist sampling criterion requires the sampling frequency to be at least twice the frequency of the observed signal. For the Michelson interferometer this implies that only wavelengths longer than or equal to the reference radiation wavelength may be measured. In practice, the limit is somewhat above the reference radiation wavelength, e.g. due to optical and electrical filters that are required to distinguish the reference radiation from the observed radiation.

A very common choice of reference radiation source is a HeNe laser with a wavelength of 632.8 nm. In order to fulfill the Nyquist criterion a HeNe laser is thus not applicable to interferometry in the ultraviolet, visible or short wave infrared regions of the optical spectrum, using a conventional Michelson interferometer. Alternatively, shorter wavelength reference lasers may be used, such as frequency doubled Nd:YAG lasers at 532 nm or violet laser diodes at 405 nm. However, as the reference radiation approaches the ultraviolet region, the demands to the optical components increase, e.g. in terms of robustness against UV-induced defects.

Another limitation of the Nyquist criterion is that reference radiation sources in the infrared are not well suited for a Michelson interferometer observing radiation in the near- or mid infrared regions of the optical spectrum. The possibility of using infrared reference radiation sources is appealing, since several well developed laser technologies exist, yielding narrow spectral emission and thus long coherence lengths. Examples of these technologies are vertical-cavity surface-emitting laser (VCSEL) diodes, with bands around e.g. 850 nm, distributed feedback (DFB) lasers developed for the telecommunications bands around 1550 nm, and fiber lasers based on Bragg gratings operating in the emission bands of a number of different rare earth elements - e.g. Yb in the range from 980-1200 nm, Er in the range from 1500-1700 nm or Th in the range from 1800 to 2100 nm.

In addition to the use of lasers with shorter wavelengths, other approaches to overcome the Nyquist criterion have been used.

CONNES, Pierre, et al. Astronomical Fourier Spectrometer. Appl. opt.. 1975, vol.14, no.9, p. 2067-2084. disclose an approach with quarter wave plates and polarizer's resulting in two laser signals in quadrature, in a doubling of the number of zero-crossings compared to the direct laser signal, and therefore a doubling of the sampling signals. This approach has the drawback that the two laser signals may deviate from perfect orthogonality, and accordingly the sampling will not be made at exact identical intervals.

PCT/WO 02071014 A (NOVELTECH SOLUTIONS LTD (FI); KAUPPINEN ISMO (FI); KAUPPINEN JYRKI (FI) ) 05.03.2001 discloses the possibility to generate a higher reference frequency by an analogue multiplication circuit. Being an interpolation of the actual optical signal, a drawback of this approach is the risk of generating undesired noise in the post processing.

US 5914780 (PERKIN ELMER LTD (GB) ) 08.10.1997 describes that both the laser and the IR signal may be sampled with high speed. The reference points are found on the sampled laser signal with signal processing and interpolated to the desired accuracy. This method has the drawback that the signal registered is only an interpolation between observed values, and therefore it is more susceptible to noise in the data.

The object of the current invention is to at least alleviate some of the abovementioned problems related to the current practices.

This object is achieved according to an interferometer as claimed in the present claim 1.

In an interferometer wherein the optical elements are arranged to provide a retardation for observed radiation which is different from the retardation for the reference radiation. The relationship between the reference retardation $\delta_{ref}$ and the observed retardation $\delta_{obs}$ may be calculated by combining the two retardations as a function of the displacement $\Delta x$ of the movable mirror reflecting observed radiation, $\delta_{ref}=\alpha_{ref}\Delta x + b_{ref}$ and $\delta_{obs}=\alpha_{obs} \Delta x + bobs$ to obtain $\delta_{ref}=A \delta_{obs} + B$, in which the slope A may be called the symmetric retardation ratio, and the intercept B may be considered the contribution to retardation from assymetric interferometer design. In such an interferometer the frequency of zero crossings for the reference radiation will be A times higher than the frequency of zero crossings for identical radiation in the observation interferometer. In the case where the optical elements of an interferometer are configured to result in a symmetric retardation ratio, A, of 2, i.e. where the retardation of the reference radiation is twice the retardation of the observed radiation, the effect on the frequency of zero crossings will correspond to the effect of using a source of reference radiation which has the double frequency in a normal interferometer. However in the case of a symmetric retardation ratio, A, of 2 the optical properties of the radiation will be maintained, so the apparent change of frequency does not affect the requirements to the optical elements such as the coating used on the beamsplitter. For this reason a factor A in the range 1.5-3 will be especially preferable, as this will allow compliance with the Nyquist criterion while only limiting optical materials by the wavelength range of observed radiation. Compared to the interpolated detection of reference points presented in the background art, this is a true zero crossing with high slope, and as such it will be easier to determine with high certainty.

These and further advantages will become apparent from a consideration of the following description of exemplary embodiments of the present invention, made with reference to the figures of the accompanying drawings of which:

Fig.1 shows a design with a detection interferometer unit and a reference interferometer unit in which the moving mirrors are operably connected to enable the reference interferometer unit to provide a reference signal for the detection interferometer unit.

Fig.2 shows a detail of a detection interferometer unit and a reference interferometer unit in which a frequency multiplication of four by multiple corner cube mirrors in the retardation of the reference interferometer unit.

Fig.3 shows an interferometer in which the optical path of the excitation radiation and the reference radiation pass the same optical elements.

Fig.4 shows an embodiment where a rotational movement of operably connected mirrors is used to obtain different retardation paths.

Fig.5 shows an embodiment where a doubling of retardation is obtained by a reference interferometer employing a movable mirror with two reflective surfaces.

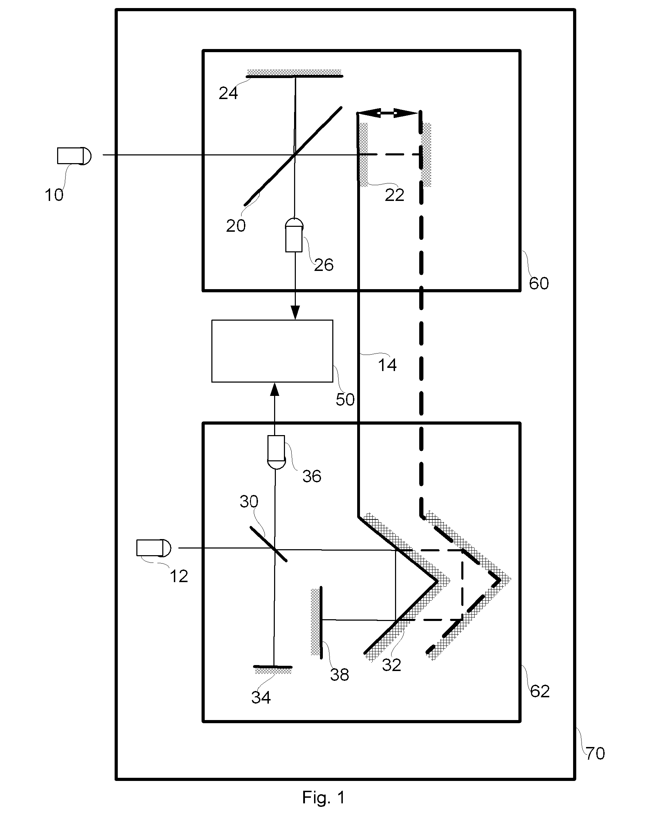

A first exemplary embodiment of the present invention is illustrated in Fig.1, in which the variable section of the optical path, is indicated by dashed lines, and similarly the movement of movable parts is shown by objects in an alternative position and drawn with dashed lines. The movement in this and other embodiments may take any form known in the art of interferometer design, including but not limited to oscillation and stepwise movement. In this embodiment an interferometer 70 is implemented as two interconnected interferometer units, an observation interferometer unit 60 and a reference interferometer unit 62. The radiation from a source of observed radiation 10, such as radiation from any radiation source which may or may not have been in contact with a sample, is transmitted to a beam splitter 20, wherein the radiation is split to traverse two optical paths - a first observed radiation optical path and a second observed radiation optical path. The light traversing the first observed radiation optical path, is reflected by a moving mirror 22, which moves between two positions, back to the beam splitter 20 and on to an observation detector 26. The light traversing the second observed radiation optical path is reflected by a fixed mirror 24, back to the beam splitter 20 and to the observation detector 26, where an interferogram is observed as the interference pattern between the radiation travelling the two observed radiation optical paths. The reference position for the moving mirror 22 is obtained by the separate reference interferometer unit 62, in which a moving corner cube mirror 32 is operably connected to the moving mirror 22 of the observation interferometer unit 60 by a connecting means 14 such as a beam. In the reference interferometer unit 62 radiation from a source of reference radiation 12, with substantially constant and monochromatic wavelength, such as a laser, is split by a reference beam splitter 30 to traverse a first reference radiation optical path and a second reference radiation optical path. The reference radiation which traverse the first reference radiation optical path is reflected by the moving corner cube mirror 32, operably connected by a connecting means 14 such as a beam, to follow the movement of the moving mirror 22 of the observation interferometer 60, onto a fixed reference mirror 38, and reflected back onto the moving corner cube mirror 32, and onto the reference beam splitter 30, from which the radiation is reflected onto a reference detector **36.** The fraction of reference radiation which traverse the second reference radiation optical path, is reflected by the reference beam splitter **30** onto a fixed reference mirror **34,** back through the beam splitter **30** to a reference detector 36 where an interferogram is observed as the interference pattern between the radiation travelling the two reference radiation optical paths. This interferogram is then processed by analogue and/or digital means in a suitably configured data-processor **50** consisting of one or more units, which may or may not be physically interconnected, to identify each zero-crossing of the bias corrected reference interferogram, and obtain a trigger signal, which is used to trigger the sampling of the observed radiation detector **26** at the times of zero crossing. This layout of the optical path results in a symmetric retardation ratio A=2, since $\delta_{ref}$=4 and $\delta_{obs}$=2. By this doubling of the reference retardation compared to the observation retardation, triggering will occur twice as often per mirror oscillation period, corresponding to the effect of using a source of reference radiation with twice the frequency in a traditional interferometer setup with identical retardation for observed radiation and reference radiation.

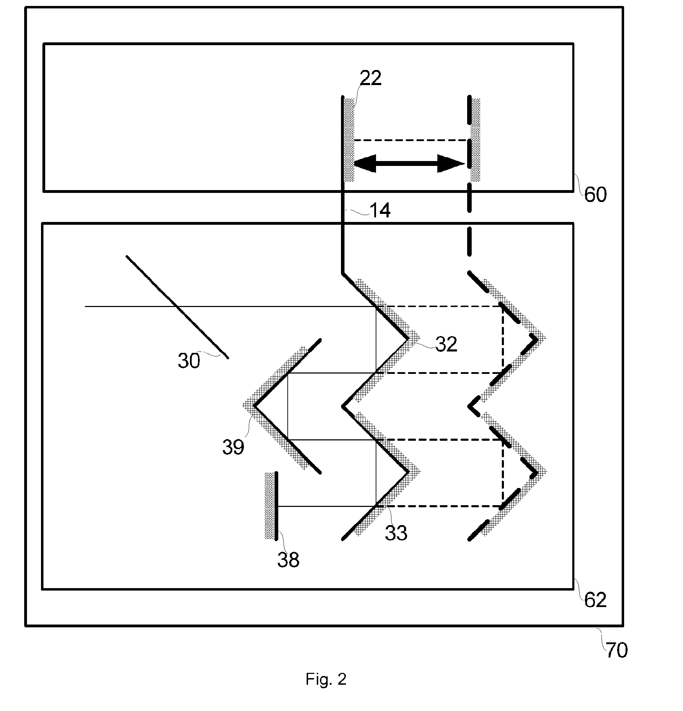

A second exemplary embodiment is illustrated in Fig. 2, in which components having the same functionality as those of Fig.1 are given identical reference numerals. For an interferometer **70** similar to the first embodiment, Fig.2 shows the optical configuration in and around the first reference optical path, but for clarity omits some parts shown in Fig. 1, which are non-essential to the characteristics of this embodiment. The variable section of the optical path, is again indicated by dashed lines, and similarly the movement of movable parts is shown by objects in an alternative position and drawn with dashed lines. This embodiment shares the general set-up of the first embodiment, but illustrates one way of attaining a symmetric retardation ratio, A, which is higher than 2. This embodiment is based on an observation interferometer unit **60** with a moving mirror **22** operably connected by a connector to two moving corner cube mirrors **32** and **33,** of a reference interferometer **62.** The moving corner cube mirror **32** of the reference interferometer in the first embodiment is replaced with two moving moving corner cube mirrors **32** and **33** and one fixed corner cube mirror **39.** In this configuration the symmetric retardation ratio, A, will be 4, due to the four-fold increase in the first optical path for reference radiation compared to the first optical path for the observed radiation. As will be realised by the person skilled in the art, the use of additional corner cube mirrors will allow a further increase in the frequency of trigger signals.

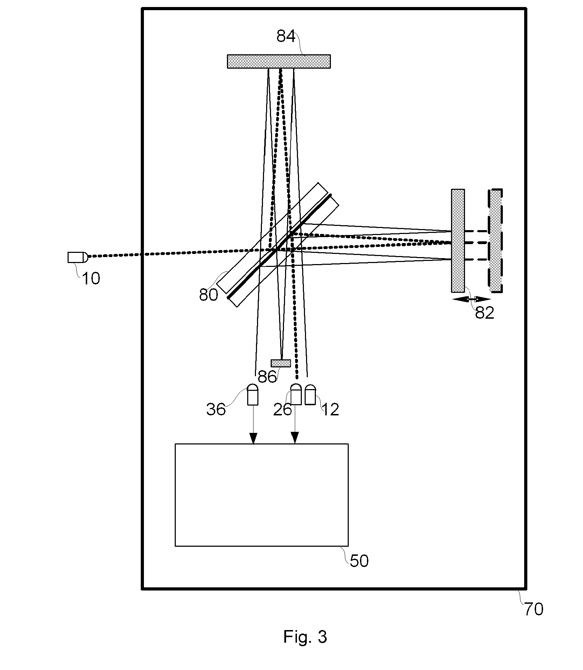

A third exemplary embodiment of the present invention is illustrated in Fig. 3, in which components having the same functionality as those of Fig.1 are given identical reference numerals. In this embodiment fewer optical elements are used, at the cost of an increased demand to the positioning of the elements. Radiation from a source of observed radiation **10,** such as radiation from any radiation source which may or may not have been in contact with a sample, is transmitted to a beam splitter **80 ,** where the radiation is split to traverse two optical paths; a first optical path of observed radiation and a second optical path of observed radiation . The part of radiation traversing the first optical path of observed radiation pass through the beam splitter **80** and is reflected by a movable mirror **82,** back to the beam splitter **80** and reflected onto an observed radiation detector **26.** The part traversing a second optical path of observed radiation is transmitted onto a fixed mirror **84,** back through the beam splitter **80** and onto the observed radiation detector **26,** where an interferogram is observed as the interference pattern between the observed radiation having traversed the two different optical paths. To obtain a reference position for the movable mirror, a source of reference radiation **12** with uniform and substantially constant radiation frequency, such as a laser, emits radiation traversing an optical path to the beam splitter **80,** where it is split to traverse two different paths; a first optical path of reference radiation and a second optical path of reference radiation. The radiation traversing the first optical path of reference radiation is reflected by the beam splitter **80** onto the moving mirror **82,** back to the beam splitter **80,** where it is reflected onto a separate reference mirror **86,** reflected back to be reflected by the beam splitter **80** onto the moving mirror **82** again and finally reflected to the beam splitter **80** and from there to a reference detector **36.** The radiation traversing the second optical path of reference radiation, through the beam splitter **80** to be reflected by the fixed mirror **84,** back on the reference mirror **86,** through the beam splitter **80** to the fixed mirror **84** and onto the reference detector **36,** where a reference interferogram is observed as the interference pattern between the reference radiation having traversed the two different optical paths. The signal recorded at the reference detector **36** is then processed either by analogue or digital means in a suitably configured data-processor **50** consisting of one or more units, which may or may not be physically interconnected, to filter away the first order harmonic of the radiation, to thus obtain a bias corrected interferogram which provides a triggering signal for each zero-crossing. In this embodiment the symmetric retardation ratio, A, is approximately 2, with a minor correction depending on the angles of reference and observed radiation. As mentioned above A=2 corresponds to the frequency of zero-crossings in a conventional interferometer using a reference radiation with twice the radiation frequency.

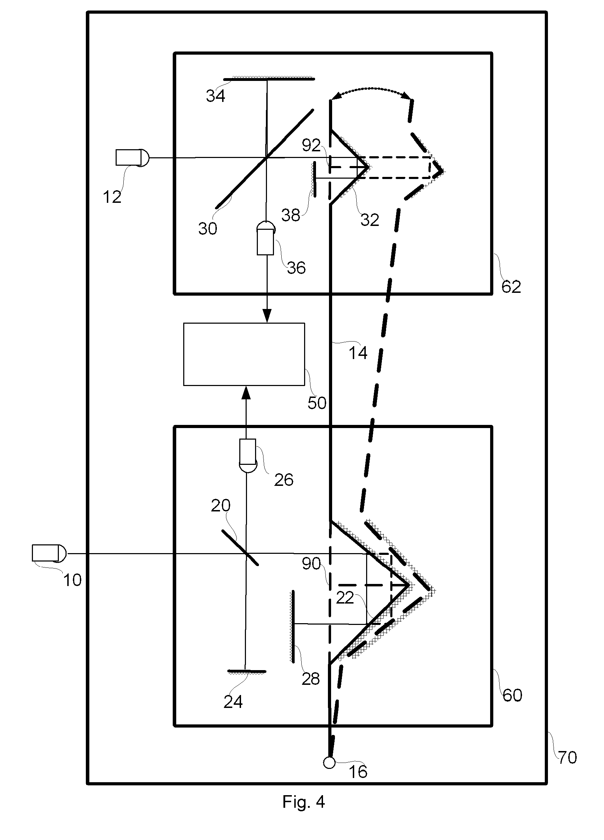

A fourth exemplary embodiment is shown in Fig. 4, showing the implementation of the invention in the case of an interferometer design employing pivotal mirror movement. The optical path of the reference interferometer unit **62** and the observation interferometer unit **60** are separate, but the optical paths are similar, comprising a corner cube mirror **(32** and **22** respectively) similar to the reference interferometer unit in the first embodiment. In this embodiment a variation of retardation (as indicated by dashed lines) is obtained by fixating the reference corner cube mirror **32** and the observation corner cube mirror **22** on a pivoting connection element **14** such as a beam, resulting in different retardation paths. In this case the symmetric retardation ratio, A, will correspond to the ratio between the distances ($d_{obs}$ **(90)** and $d_{ref}$ **(92))** of the centre of corner cube mirrors **22** and **32** to the pivot point **16**, A= $d_{ref}/d_{obs}$.

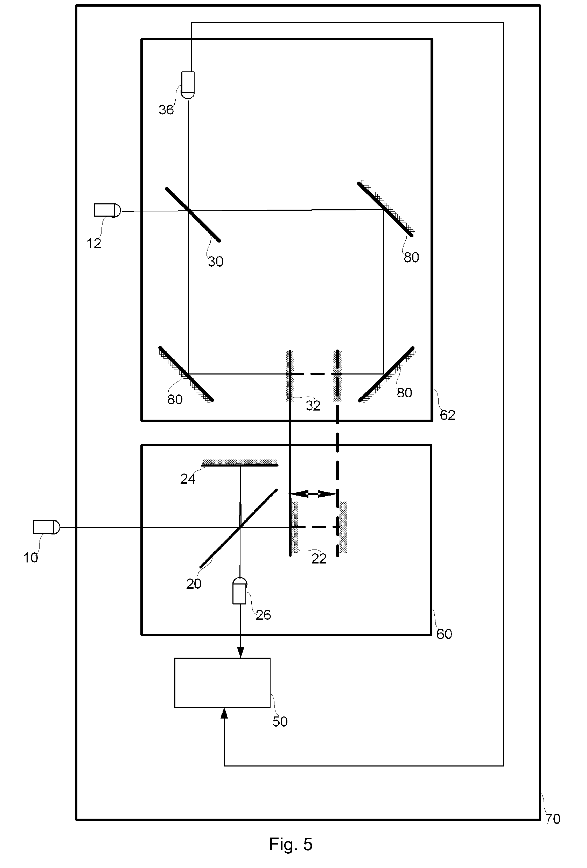

A fifth exemplary embodiment is shown in Fig. 5, which illustrates a design where a symmetric retardation ratio, A, of 2 is obtained by using both sides of the moving mirror **32** in the reference interferometer **62.** The doubling of retardation is obtained from the fact that the movement of the moving mirror **32** is substracted from the distance of one path and added to the distance of the other path. The symmetric retardation ratio, A, in this case is 2.

In the description of the embodiments above the optical paths described as defined by mirrors **(22, 24, 28, 32, 33, 34, 38, 39, 80)** and free space paths, but the skilled person will realise that it is the optical paths which define the invention rather than the choice of optical elements, and therefore other reflective elements, or optical fibres may be used to define similar optical paths.

The person skilled in the art will understand that the invention may similarly be implemented in interferometers employing other mechanisms for moving the optical elements defining the optical paths, such as rotational mirror motion as used in for example interferometers of the wishbone type.

It will also be understood by the person skilled in the art that the embodiments above may be expanded with additional elements and considerations common in interferometer design, such as use of compensator, delay compensation of sampling, and balancing of the optical paths.

The skilled person will also understand that additional embodiments exist in which multiple observed radiation detectors may be employed in the same spectrometer, to observe radiation from various sources simultaneously.

For illustration in both of the embodiments above the source of the observed radiation is exemplified as a radiation source, but as would be realised to the person skilled in the art, the possible applications of the present invention includes analysis of observed radiation obtained from absorption spectroscopy, reflection spectroscopy, Raman spectroscopy, fluorescence spectroscopy, analysis of the emission from radiation sources and combination hereof. While this list is far from exhaustive it is given to exemplify the broad use of the invention.

## Claims

1. An interferometer **(70)** for observing a source of observed radiation (10) employing a source of reference radiation **(12) characterised in that** the interferometer **(70)** is configured to provide a symmetric retardation ratio, A, higher than 1.

2. An interferometer (70) according to Claim 1 having optical elements (in Fig.1 and Fig.4: **20, 22, 24, 30, 32, 34, 38**; in Fig.2: **22, 30, 32, 33, 38, 39** and in Fig. **3: 80, 82, 84, 86)** configured to provide two optical paths for each radiation source **characterised in that** the optical elements (in Fig.1 and Fig.4: **20, 22, 24, 30, 32, 34, 38**; in Fig.2: **22, 30, 32, 33, 38, 39** and in Fig. 3: **80, 82, 84, 86)** cooperate to provide a symmetric retardation ratio, A, higher than 1.

3. An interferometer **(70)** according to claim 2 **characterised in that** one or more optical elements **(80, 82, 84)** are included in the optical paths for radiation from both the observed radiation source and the reference radiation source.

4. An interferometer **(70)** according to claim 2 comprising an observation interferometer unit **(60),** and a reference interferometer unit **(62),** with the moving mirrors **(22)** and **(32)** of the two interferometer units being operably connected, **characterised in that** the optical elements (in Fig.1 and Fig.4: **20, 22, 24, 28, 30, 32, 34, 38**; in Fig.2: **22, 30, 32, 33, 38, 39; in Fig.5: 20, 22, 24, 30, 32, 80)** are configured to provide a symmetric retardation ratio, A, higher than 1.

5. An interferometer **(70)** to any of the claims above **characterised in that** symmetric retardation ratio, A, is in the range from 1.5 to 3.

Fig. 1

Fig. 2

Fig. 3

Fig. 4

Fig. 5

**European Patent Office**

**EUROPEAN SEARCH REPORT**

Application Number

EP 08 10 0369

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | J. C. BRASUNAS, G. M. CUSHMAN: "Uniform time-sampling Fourier transform spectroscopy" APPLIED OPTICS, vol. 36, no. 10, 1 April 1997 (1997-04-01), pages 2206-2210, XP002482297 * page 2206 - page 2208 * | 1-5 | INV. G01J3/45 G01J3/453 G01B9/02 |
| A | CHAN R K Y ET AL: "FOURIER TRANSFORM ULTRAVIOLET-VISIBLE SPECTROMETER BASED ON A BEAM-FOLDING TECHNIQUE" OPTICS LETTERS, OSA, OPTICAL SOCIETY OF AMERICA, WASHINGTON, DC, US, vol. 31, no. 7, 1 April 2006 (2006-04-01), pages 903-905, XP001242346 ISSN: 0146-9592 * the whole document * | 1-5 | |
| D,A | WO 02/071014 A (NOVELTECH SOLUTIONS LTD [FI]; KAUPPINEN ISMO [FI]; KAUPPINEN JYRKI [FI] 12 September 2002 (2002-09-12) * page 4, line 25 - page 6, line 20; figure 1 * | 1-5 | TECHNICAL FIELDS SEARCHED (IPC) G01J G01B |
| A | ROY S A , GENEST J., GIACCARI P.: "Hybrid sampling approach for imaging Fourier-transform spectrometry" APPLIED OPTICS, vol. 46, no. 35, 10 December 2007 (2007-12-10), pages 8482-8487, XP002482298 * page 8482 - page 8485 * | 1-5 | |

The present search report has been drawn up for all claims

| Place of search | Date of completion of the search | Examiner |
|---|---|---|
| Munich | 30 May 2008 | Besser, Veronika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 08 10 0369

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2008

| Patent document cited in search report | | Publication date | Patent family member(s) | | Publication date |
|---|---|---|---|---|---|
| WO 02071014 | A | 12-09-2002 | FI | 20010435 A | 06-09-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02071014A A

- US 5914780 A

**Non-patent literature cited in the description**

- **CONNES, PIERRE et al.** Astronomical Fourier Spectrometer. *Appl. opt.,* 1975, vol. 14 (9), 2067-2084